(19) Europäisches Patentamt

European Patent Office

Office européen des brevets

(11) **EP 1 030 487 A2**

(12) **EUROPÄISCHE PATENTANMELDUNG**

(43) Veröffentlichungstag:
    23.08.2000  Patentblatt 2000/34

(51) Int. Cl.[7]: **H04L 27/26**

(21) Anmeldenummer: **00101585.8**

(22) Anmeldetag: **27.01.2000**

(84) Benannte Vertragsstaaten:
    **AT BE CH CY DE DK ES FI FR GB GR IE IT LI LU MC NL PT SE**
    Benannte Erstreckungsstaaten:
    **AL LT LV MK RO SI**

(30) Priorität: **28.01.1999 DE 19903367**

(71) Anmelder:
    **SIEMENS AKTIENGESELLSCHAFT**
    **80333 München (DE)**

(72) Erfinder:
    • **Lehmann, Uwe**
      **85221 Dachau (DE)**
    • **Borst, Karlheinz**
      **80805 München (DE)**

(54) **Verfahren zum Synchronisieren von Sender und Empfänger bei einer Datenübertragung mit einem Mehrträgerfrequenzverfahren über Energieversorgungsleitungen**

(57) In der Frequenzebene eines Multiträgerfrequenzverfahrens wird ein frequenzdiskretes Synchronisiersymbol (sys) definiert, aus diesem gemäß dem Multiträgerfrequenzverfahren ein zeitdiskretes Synchronblocksignal (sofs) gebildet und zyklisch in zeitdiskrete Informationsblocksignale (ofs) eingefügt. Nach der Übermittlung über ein Übertragungsmedium (UM) wird das zeitdiskrete Signal (ofs') in frequenzdiskrete Symbole (sm1..n) umgesetzt und in diesen das frequenzdiskrete Synchronisiersymbol (sys) mit Hilfe eines frequenzdiskreten Suchalgorithmus gesucht.

Fig.2

EP 1 030 487 A2

**Beschreibung**

Für die Übertragung von Informationen, insbesondere Daten, beispielsweise vom oder zum Internet, sind im Bereich der anzuschließenden Kommunikationsendgeräte - beispielsweise Personalcomputer - neben den Fernmeldeleitungen eines Fernmeldenetzes zukünftig auch Energieversorgungsleitungen des Energieversorgungsneztes mit einer Versorgungsspannung von 230/400 V vorgesehen. Hierfür sind Modulationsverfahren wie das CDMA-Verfahren (Code Division Multiple Access) mit der DSSS-Technik (Direct Sequence Spread Spectrum), das OFDM-Verfahren (Orthogonal Frequency Division Multiplexing) bzw. das DMT-Verfahren (Discrete Multi Tone) sowie verschiedene Einträgerverfahren wie z.B. FSK-Modulation (Phase Shift Keying) oder QAM-Verfahren (Quadratur Amplitude Modulation) geeignet. Der Zugriff auf die übertragungstechnischen Ressourcen wird zusätzlich durch verschiedene Zugriffsverfahren wie TDMA- (Time Division Multiple Access) bzw. FDMA-Verfahren (Frequency Division Multiple Access) gesteuert.

Bei den Mehrträgerfrequenzverfahren ist eine Synchronisierung zwischen einem Sender und einem Empfänger erforderlich. Bei den aus IEEE Communication Magazine February 1995, Transmission Techniques for Digital Terrestrial TV Broadcasting" bekannten Synchonisierverfahren wird im Sender ein spezielles Zeitsignal, das aus Pseudo-Random-Datensequenzen bzw. einem Synchrondatenwort gebildet ist - z.B. Barker-Folgen -, meist zyklisch in den zu sendenden Datenstrom eingefügt. Der Summendatenstrom wird anschließend über ein Übertragungsmedium - beispielsweise drahtgebundene oder drahtlose Übertragungsstrecken - an einen Empfänger übertragen. Im Empfänger werden bzw. wird im empfangenen Zeitsignal die eingefügten, speziellen Zeitsignale bzw. das Synchrondatenwort mit Hilfe einer Korrelationsfunktion gesucht. Nach einem Auffinden zumindest eines Synchronwortes kann der Nutzdatenstrom durch ein synchronisiertes Abtasten der übermittelten Nutzdaten erkannt werden.

Für die Übertragung von Informationen bzw. Daten über eine Energieversorgungsleitung im Anschlußbereich von Kommunikationsendgeräten, insbesondere zwischen Personalcomputern und dem Internet - in der Fachwelt auch als Power Line Communication bekannt - ist zunehmend ein Multiträgerfrequenzverfahren, insbesondere das OFDM-Übertragungsverfahren vorgesehen. Besonders geeignet für eine Übertragung über Energieversorgungsleitungen ist ein OFDM-Übertragungsverfahren, bei dem die Dateninformationen durch die Phasendifferenz zwischen den jeweils benachbarten Subträgern übertragen werden - siehe hierzu Digitale Fersehtechnik, Springer Verlag Berlin 1995, "Der Stand zur terrestrischen Ausstrahlung und seine Decodiertechnik",Ulrich Reimers, S.225-252. Beim DAB-Verfahren (Digital Audio Broadcast) werden beispielsweise Synchronworte bestimmten Datenfolgen und bestimmte zyklisch wechselnde Belegungen der Trägersignale zur Auswertung der Kanaleigenschaften, der Trägersignal- und der Taktsignalphase verwendet. Die Synchronisierung zwischen einem nach dem OFDMÜbertragungsverfahren wirkenden Sender und Empfänger wird in vorhergehend beschriebener Weise durchgeführt.

Die der Erfindung zugrundeliegende Aufgabe besteht darin, die bei insbesondere nach dem OFDM-Übertragungsverfahren wirkenden Datenübertragungen eingesetzten Synchronisierverfahren zu verbessern. Die Aufgabe wird durch die Merkmale des Patentanspruchs 1 gelöst.

Der wesentliche Aspekt des erfindungsgemäßen Verfahrens ist darin zu sehen, daß in der Frequenzebene des Multiträgerfrequenzverfahrens ein frequenzdiskretes Synchronisiersymbol definiert und mit dem Synchronisiersymbol gemäß dem Multiträgerfrequenzverfahren ein zeitdiskretes Synchronblocksignal derart gebildet wird, daß es zyklisch in die mit Hilfe des Multiträgerfrequenzverfahrens gebildeten, zeitdiskreten Informationsblocksignale, ein zeitdiskretes Signal bildend, eingefügt wird. Das Signal wird über ein Übertragungsmedium übermittelt und nach der Übermittlung wird das zeitdiskrete Signal in frequenzdiskrete Symbole umgesetzt und in diesen das frequenzdiskrete Synchronisiersymbol mit Hilfe eines frequenzdiskreten Suchalgorithmus gesucht.

Ein wesentlicher Vorteil des erfindungsgemäßen Verfahrens besteht darin, daß keine Trägersignal-Rückgewinnung aus dem übertragenen Signal erforderlich ist und auch keine speziellen Synchroninformationen vorzusehen sind. Dies bedeutet ein schnelleres Erkennen der Synchronisierinformation und damit eine schnellere synchronisierte Abtastung der übertragenen Daten. Ein weiterer Vorteil des erfindungsgemäßen Verfahrens ist darin zu sehen, daß bei der Suche nach dem frequenzdiskreten Synchronisiersymbol für eine "Grobsynchronisierung" keine exakte Übereinstimmung der detektierten Synchronisiersymbole mit der in einem Empfänger vorliegenden Vergleichs-Synchroninformation erforderlich ist, sondern bereits Korrelationen mit einem Teil des Synchronisiersymbols ausreichen. Hierdurch ist das erfindungsgemäße Verfahren robuster gegenüber starken Störungen und durch das Übertragungsmedium verursachten Übertragungskanal-Verzerrungen.

Um Störungen durch Symbolinterferenzen zu überdrücken, wird das zeitdiskrete Synchronblocksignal wie das Informationsblocksignal vorteilhaft um ein Guard-Zeitintervall verlängert - Anspruch 2. Hierbei ist das Guard-Zeitintervall durch einen Teil des zeitdiskreten Sychronblocksignals repräsentiert, wobei der Teil im Endbereich der zeitdiskreten Synchronblockinformation liegt - Anspruch 3.

Gemäß einer vorteilhaften Ausgestaltung des erfindungsgemäßen Verfahrens werden die zeitdiskreten Signalblöcke in frequenzdiskrete Symbole durch eine inverse Fourier-Transformation und die frequenzdiskreten Symbole in zeitdiskrete Blocksignale durch eine Fourier-Transformation umgesetzt - Anspruch 4. Da die Fourier-Transformation und die inverse Fourier-Transformation - insbesondere die Fast Fourier-Transformation und die inverse Fast-Fourier-Transformation - in der Fachwelt als FFT und inverse FFT bekannt - bereits in Schaltkreise integriert ist, kann das erfindungsgemäße Verfahren besonders wirtschaftlich realisiert werden.

Die zwischen zwei Synchronblocksignale eingefügten Informationsblocksignale umfassen ganzzahlige Vielfache der Zeitdauer eines Synchronblocksignals - Anspruch 5 -, wodurch ein Suchalgorithmus zum Suchen der Synchronisiersymbole einfacher zu realisieren ist.

Weitere vorteilhafte Ausgestaltungen, insbesondere ein Suchalgorithmus zum Suchen der Synchronisiersymbole, sind den weiteren Ansprüchen zu entnehmen und werden im folgenden Ausführungsbeispiel näher erläutert. Dabei zeigen

Fig. 1    in einem Blockschaltbild einen nach dem OFDM-Übertragungsverfahren wirkenden Sender,

Fig. 2    in einem Ablaufdiagramm einen Suchalgorithmus zum Auffinden des Synchronsymbols

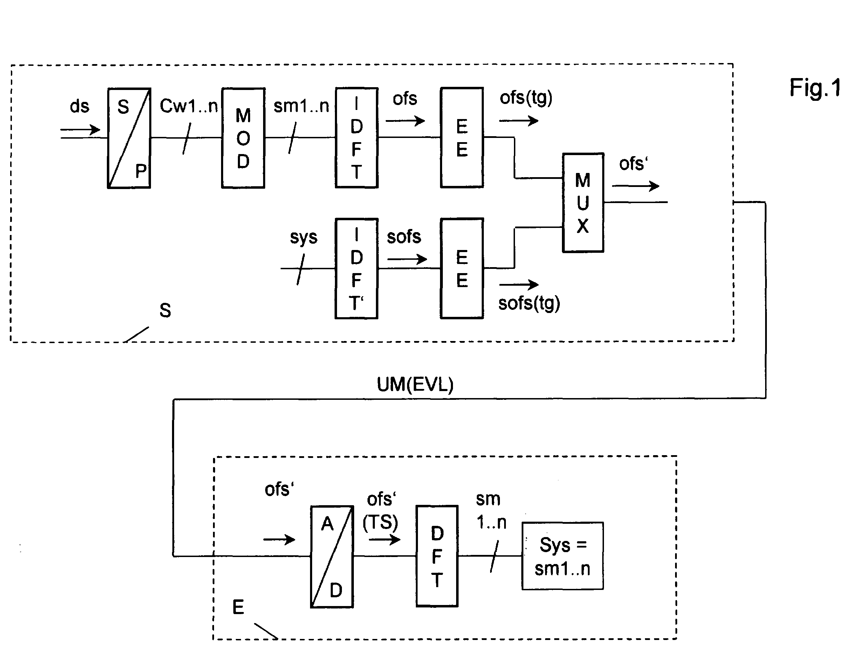

Fig. 1 zeigt in einem Blockschaltbild die zur Erläuterung des erfindungsgemäßen Verfahrens erforderlichen Komponenten eines Senders S, der nach dem OFDM-Übertragungsverfahren realisiert ist, wobei die Daten durch die Phasendifferenz benachbarter Subträgersignale s1..n übertragen werden.

Ausgehend von einem seriellen Datenstrom ds wird für die Modulation der 1..n Subträgersignale s1..n mit Hilfe eines Serien/Paralellwandlers S/A eine Seriell-Parallel-Wandlung des Datenstroms ds durchgeführt. Hierbei wird der serielle Datenstrom ds jeweils in 1..n parallele Datenfolgen bzw. Codewörter cw1..n aufgeteilt, wobei ein Codewort cw1..n jeweils k Bits - beispielsweise 2 Bit - umfaßt. Die 1..n Codewörter cw1..n werden an die 1..n Eingänge eines nachgeschalteten Modulators MOD geführt, wobei die 1..n Eingänge 1..n Subträgersignalen zugeordnet sind. Im nachfolgenden Modulator MOD wird in Abhängigkeit von dem jeweils aktuell vorliegenden Codewort cw1..n jeweils das entsprechende komplexe Modulationssymbol ms1..n - in digitaler Form - für das jeweilige Subträgersignal s1..n ausgewählt. In einer Fourieranalyse-Einheit IDFT wird mit Hilfe der inversen diskreten Fourier-Transformation für die jeweils einen OFDM-Block ob bildenden, aktuell parallel anliegenden Codewörter cw1..n bzw. Modulationssymbole ms1..n ein digitales zeitdiskretes OFDM-Signal ofs gebildet. Um Intersymbol-Interferenzen zu vermeiden, wird in einer Einfügeeinheit EE jedem einen OFDM-Block ob repräsentierenden zeitdiskreten OFDM-Signal ofs ein Guard-Zeitinvervall gi vorangestellt, d.h. das digitale zeitdiskrete OFDM-Signal wird periodisch um das Guard-Zeitintervall tg verlängert. Das Guard-Zeitintervall tg soll mindestens so groß sein wie die maximal auftretende Laufzeitdifferenz zwischen dem Sender und einem über ein Übertragungsmedium verbundenen Empfänger E. Vorteilhaft ist als Guard-Zeitintervall tg ein Teil des digitalen zeitdiskreten OFDM-Signals vorgesehen, wobei insbesondere der Endbereich des OFDM-Signals ofs verwendet wird.

Erfindungsgemäß wird zusätzlich in der Frequenzebene, d.h. in Form von digitalen komplexen Modulationssymbolen ms ein Synchronisiersymbol sys bzw. ein komplexes Synchronisierwort definiert - in Fig.1 durch die Bezeichnung sys(ms) angedeutet. Dieses Synchronisiersymbol sys wird Hilfe einer die inverse diskrete Fourier-Transformation realisierende Transformationseinheit IDFT' in ein digitales zeitdiskretes Synchronisier-OFDM-Signal sofs transformiert und um ein Guard-Zeitintervall tg verlängert, wobei das das Sychronisierwort und damit einen Synchronblock repräsentierende Synchronisier-OFDM-Signal sofs und das die Nutzdaten enthaltende OFDM-Signal ofs zeitlich gleich lang sind. Der Inhalt des Synchronsymbols ist lediglich dahingehend eingeschränkt, daß es nicht mit häufig verwendeten Symbolen identisch sein soll - beispielsweise unbelegter Übertragungskanal _ und daß die maximale Amplitude des OFDM-Signals klein bleibt. Mit Hilfe eines Multiplexers MUX wird das gebildete Synchronisier-OFDM-signal sofs zyklisch in die zeitdiskreten OFDM-Signale ofs eingefügt. Beim Ausführungsbeispiel sei angenommen, daß in jedes fünfzigste ODFM-Signal ofs ein Sychronisier-OFDM-Signal sofs ist, d.h. das Summen-OFDM-Signal ofs' weist 50 Synchronblocklängen TS0..49 auf.

Nach einer Digital-Analog-Wandlung durch einen Digital/Analog-Wandler D/A wird das Summen-OFDM-Signal ofs' durch eine auf das vorgesehene Übertragungsmedium UM angepaßte Sendeeinheit SE ausgesandt - durch eine mit UM bezeichnete Linie angedeutet. Bei beispielsweise einer Übertragung über eine Energieversorgungsleitung EVL wird das analoge Summen-OFDM-Signal ofs' verstärkt und kapazitiv oder induktiv in die Energieversorgungsleitung EVL eingekoppelt.

Fig.1 zeigt zusätzlich einen Empfänger E, der für das Suchen und Auffinden der in die Summen-OFDM-Signale ofs' eingefügten Synchronisiersymbole sys ausgestaltet ist. Das analoge, von einer analogen Empfangseinheit - nicht dargestellt - übermittelte Summen-OFDM-Signal ofs' wird einem Analog/Digital-Wandler A/D zugeführt und in digitale Signale gewandelt. In einer Fourier-Transformationseinheit DFT werden die digitalisierten Signale jeweils einer Synchronblocklänge TS entsprechend partitioniert, um das Guardintervall tg gekürzt und über eine diskrete Fourier-Transformation - in der Fachwelt als Fast Fourier-Transformation bekannt - in Modulationssymbole ms' umgewandelt. Diese Modulationssymbole ms' werden mit den definierten Sychronisiersymbolen sys verglichen, in dem in der Frequenzebene die Autokorrelationsfunktion berechnet wird. Im Empfänger sind die für die Demodulation der Nutzinformationen vorgesehenen Einheiten nicht dargestellt, wobei die dargestellten Komponenten des Empfängers E bei entsprechenden Steuer- und Umschalteinheiten auch für die Demodulation der Nutzinformationen verwendet werden können.

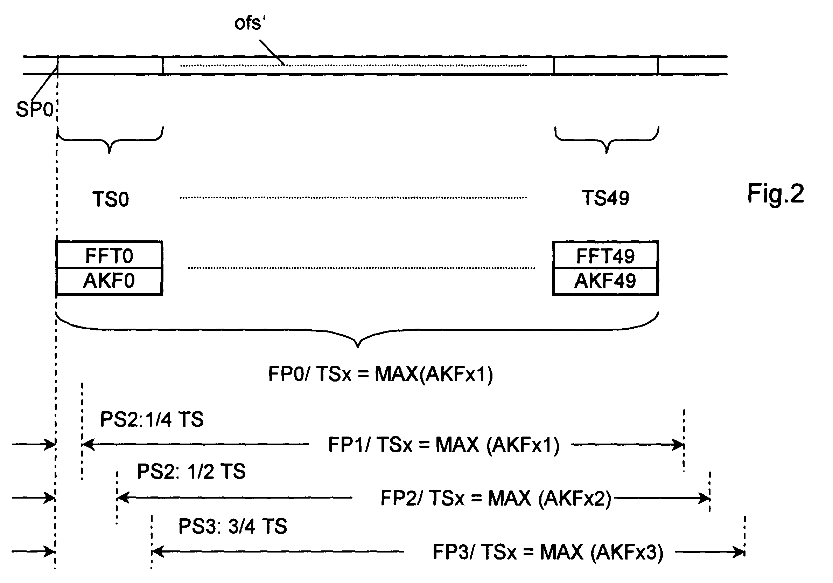

Beim erfindungsgemäßen Algorithmus wird das digitalisierte Summen-OFDM-Signal ofs' in 50 Teile bzw. Sychronblocklängen TS0..49 partitioniert - siehe Fig.2. Die 50 Teile werden in einen den Synchronisierempfänger realisierenden Signalprozessor eingelesen, um das Guard-Zeitintervall tg gekürzt und anschließend, wie vorhergehend beschrieben, in Modulationssymbole ms' transformiert. Anschließend wird das Maximum der Auto-Korrelationsfunktion AKF0..49 der 50 Teile, d.h. der Synchronblocklängen TS0..49, berechnet und die Nummer des Teils bzw. der Synchronblocklänge TSx, in der das Maximum der Auto-Korrelationsfunktion AKFx auftritt, und die Startposition SP0 gespeichert. Die Untersuchung der ersten 50 Teile bzw. 50 Synchronblocklängen TS0..49 stellt einen ersten Partitionierzyklus FP0 dar, wobei als Startposition SP die Startposition SP1 des ersten Partitionierzyklus FP0 gespeichert wird. Anschließend wird, wie vorhergehend beschrieben, ein zweiter, ein dritter und ein vierter Partitionierzyklus FP1..3 durchgeführt, wobei ausgehend von der ersten Startposition SP0 jeweils die Startposition SP um ¼ Synchronblocklänge TS verschoben wird. Am Ende der Partitionierzyklen FP1..3 wird jeweils die Nummer des Teils bzw. der Synchronblocklänge TSx, in der das Maximum der Auto-Korrelationsfunktion AKFx auftritt, und die Startposition SP1..3 gespeichert - in Fig. 2 durch die Bezeichnungen FP1..3/ TSx = MAX(AKFx1..3) angedeutet.

Aus den vier ermittlelten Maximas der Auto-Korrelationsfunktion AKFx0..3 wird wiederum das größte Maximum bestimmt. Der ermittelte Partitionierzyklus FP und dessen Startposition SP - beispielsweise die Startposition SP2 und der Partitionierzyklus FP2 - sowie die dazugehörige Synchronblocklänge TSx dienen zur Definition der Startposition eines weiteren Partitionierzyklus ΔFP. Die Startposition SP des weiteren Partitionierzyklus ΔFP wird derart gewählt, daß die weitere Startposition ΔSP eine Synchronisierblocklänge TS vor der das Maxima x der Auto-Korrelationsfunktion AKF repräsentierenden Synchronisierblocklänge TS liegt. Nach dem Start des weiteren Partitionierzyklus ΔFP werden für die Dauer von drei Synchronblocklängen TS zeitdiskrete OFDM-Signale ofs in einen Signalprozessor eingelesen und über einen Feindetektionsalgorithmus, der wiederum auf der verwendeten Auto-Korrelationsfunktion basiert, wird die exakte Position des Synchronisiersymbols sys und damit der exakte Startzeitpunkt der Synchronisierinformation bzw. des Synchronwortes ermittelt. Anschließend können die regulären Partitionierzyklen mit exakter blocksynchroner Verarbeitung der übermittelten Daten gestartet werden.

Die Position des das Maxima der Auto-Korrelationsfunktion AKFx enthaltende Synchronblocks kann auch zyklisch während der Auswertung der Auto-Korrelationsfunktion AKF kontrolliert werden, wobei die Startposition ΔSP entsprechend des Ergebnisses der Auto-Korrelationsfunktion AKF korrigiert wird. Die Korrektur erfolgt durch Kürzung oder Verlängerung des Guard-Zeitintervalls tg, wobei der die Nutzinformation tragende Teil eines partitionierten OFDM-Signals ofs unverändert bleibt. Die Verschiebung der Position des Synchronblockes aus der durch den Suchalgorithmus gefundenen Position wird durch Frequenzabweichungen der im Sender S und im Empfänger E eingesetzten Taktoszillatoren verursacht, wobei die Genauigkeit der im Sender S und Empfänger E eingesetzten Taktoszillatoren derart hoch sein muß, daß die Frequenzabweichungen durch geringfügige Änderungen des Guard-Zeitintervalls tg korrigiert werden können. Das Guard-Zeitintervall darf nur soweit gekürzt werden, daß die Funktion des Guard-Zeitintervalls tg - Schutz vor Symbolinterferenzen - wirksam bleibt.

Das erfindungsgemäße Verfahren ist nicht auf das vorhergehend beschriebene Ausführungsbeispiel beschränkt, sondern kann in allen Einrichtungen eingesetzt werden, bei denen die zu übermittelnden Daten durch das OFDM-Übertragungsverfahren über ein Übertragungsmedium wie zum Beispiel Energieversorgungsleitung oder Funkstrecke oder Koaxialkabel oder Kupferleitung oder optische Leitung übermittelt werden. Dies trifft insbesondere für die Übertragung von Daten mit hoher Übertragungsgeschwindigkeit zwischen Kommunikationsendgeräten und den Vermittlungseinrichtungen in einem Kommunikationsnetz zu, wobei das OFDM-Übertragungsverfahren als eine xDSL-Realisierung - Realisierung als "Digital Subcriber Line" - für unterschiedliche, zwischen dem Kommunikationsendgeräten und den Vermittlungseinrichtungen eingesetzten Übertragungsmedien vorgesehen ist.

**Patentansprüche**

1. Verfahren zum Übermitteln von digitalen Informationen (ds) durch ein nach einem Multiträgerfrequenzverfahren moduliertes Signal (ofs'),

   - bei dem in der Frequenzebene des Multiträgerfrequenzverfahrens ein frequenzdiskretes Synchronisiersymbol (sys) definiert wird,
   - bei dem mit dem Synchronisiersymbol (sys) gemäß dem Multiträgerfrequenzverfahren ein zeitdiskretes Synchronblocksignal (sofs) derart gebildet wird, daß es zyklisch in die mit Hilfe des Multiträgerfrequenzverfahrens gebildeten, zeitdiskreten Informationsblocksignale (ofs), ein zeitdiskretes Signal (ofs') bildend, eingefügt wird und das Signal (ofs') über ein Übertragungsmedium (UM) übermittelt wird,

- bei dem nach der Übermittlung das zeitdiskrete Signal (ofs') in frequenzdiskrete Symbole (sm1..n) umgesetzt und in diesen das frequenzdiskrete Synchronisiersymbol (sys) mit Hilfe eines frequenzdiskreten Suchalgorithmus gesucht wird.

2. Verfahren nach Anspruch 1, dadurch gekennzeichnet,
daß das zeitdiskrete Synchronblocksignal (ofs) um ein Guard-Zeitintervall (tg) verlängert wird.

3. Verfahren nach Anspruch 2, dadurch gekennzeichnet,
daß das Guard-Zeitintervall (tg) durch einen Teil des zeitdiskreten Sychronblocksignals (ofs) repräsentiert ist, wobei der Teil im Endbereich des zeitdiskreten Synchronblocksignals (sofs) liegt.

4. Verfahren nach einem der Ansprüche 1 bis 3, dadurch gekennzeichnet,
daß die zeitdiskreten Signalblöcke (ofs') in frequenzdiskrete Symbole (sm1..n) durch eine Fourier-Transformation (DFT) und die frequerizdiskreten Symbole (sm1..n) in zeitdiskrete Blocksignale (ofs) durch eine inverse Fourier-Transformation (IDFT) umgesetzt werden.

5. Verfahren nach einem der vorhergehenden Ansprüche, dadurch gekennzeichnet,
daß die zwischen zwei Synchronblocksignale (sfs) eingefügten Informationsblocksignale (ofs) ganzzahlige Vielfache der Zeitdauer eines Synchronblocksignals (sys) umfassen.

6. Verfahren nach Anspruch 4, dadurch gekennzeichnet,

a) daß das über ein Übertragungsmedium (UM) übermittelte, zeitdiskrete Signal (ofs') in der Synchronblocksignallänge (TS) entsprechende Teilsignale partitioniert wird sowie diese jeweils um das Guard-Zeitintervall (tg) verringert werden, wobei die Anzahl der Teilsignale der Summe der Zeitdauer von Sychronblocksignalen (sys) zwischen zwei Synchronblocksignalen (sys) entspricht,
b) daß mit Hilfe der Fourier-Transformation (DFT) die zeitdiskreten Blocksignale (ofs'(TS) in frequenzdiskrete Symbole umgesetzt und diese mit Hilfe einer Auto-Korrelationsfunktion (AK) mit dem definierten Synchronsymbol (sys) verglichen werden,
c) daß bei keinem, zumindest eine teilweise Übereinstimmung anzeigenden Vergleichsergebnis die Schritte a) und b) solange wiederholt werden, wobei die Partitionierungs-Startpositionen (SP) jeweils variiert werden, bis ein zumindest eine teilweise Übereinstimmung anzeigendes Vergleichsergebnis vorliegt.

7. Verfahren nach Anspruch 6, dadurch gekennzeichnet,
daß nach einem eine teilweise Übereinstimmung anzeigenden Vergleichsergebnis im Sinne einer Feinsynchronisierung die Partitionierungs-Startposition (SP) geringfügig variiert wird und die Schritte a) und b) solange wiederholt werden, bis ein eine annähernde Übereinstimmung anzeigendes Vergleichsergebnis vorliegt.

8. Verfahren nach einem der vorhergehenden Ansprüche, dadurch gekennzeichnet,
daß die Frequenzablage eines für eine Abtastung des übermittelten zeitdiskreten Signals (ofs') vorgesehenen Taktsignals derart genau ist, daß die Frequenzablage durch eine geringe Verkürzung oder Verlängerung des Guard-Zeitintervalls (tg) kompensiert werden kann, wobei die Funktion des Guard-Zeitintervalls erhalten bleibt.

9. Verfahren nach einem der vorhergehenden Ansprüche, dadurch gekennzeichnet,
daß als Mehrträgerfrequenzverfahren das OFDM-Übertragungsverfahren vorgesehen ist, wobei die Daten über die Phasendifferenz benachbarter Subträger des Mehrträgerfrequenzverfahrens übertragen werden.

10. Verfahren nach einem der vorhergehenden Ansprüche, dadurch gekennzeichnet,
daß das zeitdiskrete Signal (ofs') in einem Sender (S) gebildet und das Synchronblocksignal (sys) in einem mit dem Sender über ein Übertragungsmedium (UM) verbundenen Empfänger (E) gesucht wird.

11. Verfahren nach einem der vorhergehenden Ansprüche, dadurch gekennzeichnet,
daß als Übertragungsmedium Engergieversorgungsleitungen (EVL), drahtgebundene oder drahtlose Übertragungsstrecken vorgesehen sind.

Fig.1

MUX → ofs'

EE → ofs(tg)

EE → sofs(tg)

IDFT → ofs

IDFT' → sofs

MOD — sm1..n

sys

S/P — Cw1..n

ds

S

UM(EVL)

Sys = sm1..n

DFT — sm 1..n

A/D → ofs'(TS)

ofs'

E

ofs'

SP0

TS0 ............................................ TS49

FFT0
AKF0

FFT49
AKF49

FP0/ TSx = MAX(AKFx1)

PS2:1/4 TS

FP1/ TSx = MAX (AKFx1)

PS2: 1/2 TS

FP2/ TSx = MAX (AKFx2)

PS3: 3/4 TS

FP3/ TSx = MAX (AKFx3)

Fig.2

EP 1 030 487 A2